# FASCICULE DE BREVET EUROPEEN

(11) **EP 0 410 873 B1**
(45) Date de publication et mention de la délivrance du brevet: **23.03.1994**
(21) Numéro de dépôt: 90402130.0
(22) Date de dépôt: 25.07.1990
(51) Int. Cl.: H04L 12/40, H04L 12/46

(54) **Dispositif d'interconnexion et d'extension de bus dans un réseau de transmission d'informations**
Vorrichtung zur Verbindung und Erweiterung von Bussen in einem Nachrichtenübertragungsnetz
Device for interconnecting and extending busses in an information transmission network

(30) Priorité: 25.07.1989 FR 8909973
(43) Date de publication de la demande: 30.01.1991
(73) Titulaire: REGIE NATIONALE DES USINES RENAULT, 92109 Boulogne-Billancourt (FR)
(72) Inventeur: Lenoir, Dominique, F-92360 Meudon-la-Fôret (FR)
(74) Mandataire: Srour, Elie

(56) Documents cités:
- EP-A- 0 081 335
- GB-A- 2 185 666

## Description

La présente invention se rapporte à un dispositif d'interconnexion de bus dans un réseau de transmission d'informations par multiplexage où chaque bus relie une pluralité de modules ou stations.

On connaît des réseaux de transmission d'informations comportant plusieurs stations grâce auxquelles des informations sont échangées entre les stations.

Dans ces réseaux on distingue les stations maîtres des stations esclaves. Une station maître peut accéder au réseau à tout instant alors qu'une station esclave ne peut répondre que sur interrogation.

Dans les réseaux utilisant pour support de transmission une liaison électrique simple ou multiple et un protocole d'accès aléatoire le nombre de stations pouvant être connectées au réseau est limité par les interfaces de ligne assurant l'interface entre les stations et le réseau. Une interface de ligne constitue une charge et le nombre de charges connectables à un bus est fonction des caractéristiques électriques de l'interface de ligne.

Pour augmenter le nombre de stations d'un réseau au-delà des possibilités des interfaces de ligne il est nécessaire de recourir à une architecture utilisant un organe superviseur de bus qui orchestre le sens de transfert des informations entre les différents bus. Ceci limite l'architecture et impose des contraintes sur le type de module (maître ou esclave) implanté sur les bus.

La présente invention a pour but de fournir un dispositif d'interconnexion de bus permettant l'augmentation du nombre de stations connectées en évitant des contraintes décrites au paragraphe précédent (gestionnaire ou superviseur de réseau). Le réseau se comporte comme un seul bus auquel l'ensemble des stations sont connectées. Vis à vis des interfaces de ligne, les bus sont individualisés et seules les stations connectées à un même bus sont comptabilisées comme une charge sur ce bus. Ce dispositif s'applique à des bus à accès aléatoire et à détection de collision non destructive.

Conformément à l'invention, le dispositif est caractérisé par le fait qu'il comporte des moyens électroniques de comparaison recevant les tensions des différents bus et délivrant une tension correspondant à la tension extrême des différentes tensions d'entrée et des moyens de correction appliquant un écart faible à ladite tension extrême et des moyens de distribution de ladite tension corrigée aux différents bus.

Selon une caractéristique, les moyens électroniques de comparaison sont constitués par un amplificateur opérationnel de tension recevant en entrée les tensions des différents bus.
Les moyens de distribution sont constitués par un circuit à diodes recevant la tension corrigée et appliquant ladite tension à chaque bus.

L'invention va maintenant être décrite avec plus de détail en se référant à des modes de réalisation donnés à titre d'exemples et représentés sur les dessins annexés sur lesquels :
- la figure 1 est un schéma d'un réseau équipé du dispositif selon l'invention.
- la figure 2 est un schéma fonctionnel du dispositif de connexion selon l'invention.
- la figure 3 est un schéma fonctionnel d'une variante du dispositif de la figure 2.
- la figure 4 est un schéma électrique du dispositif de la figure 2.
- la figure 5 est un schéma électrique du dispositif de la figure 3.

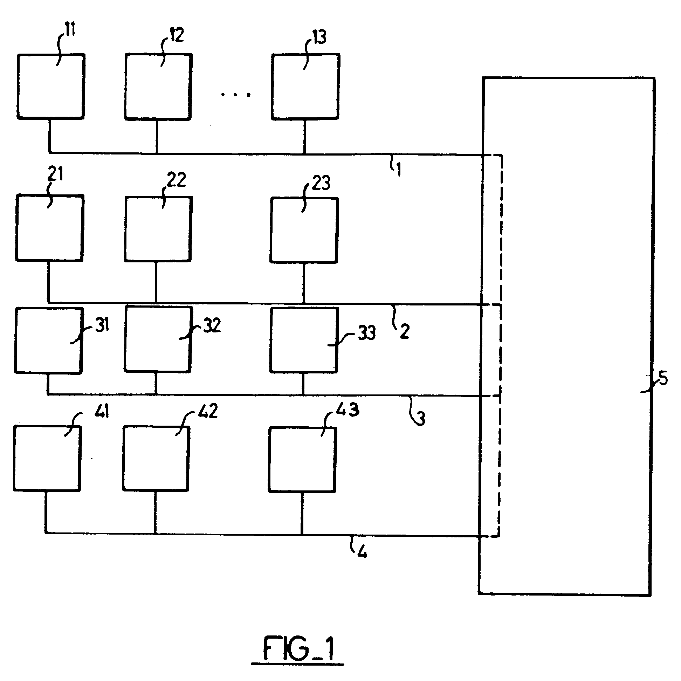

On voit sur la figure 1 un réseau en étoile qui comprend une pluralité de bus 1 à 4 réalisant le transfert des données et commandes.Le système peut être étendu à n bus. La fonction de routage des informations entre les bus est assurée par un module de connexion 5. Le nombre de bus ici 4 est donné à titre indicatif. Chaque bus connecte une pluralité de stations maîtres ou esclaves. Ces stations sont repérées 11 à 13 sur la ligne de bus 1, 21 à 23 sur la ligne de bus 2, 31 à 33 sur la ligne de bus 3 et 41 à 43 sur la ligne de bus 4.

Chaque bus présente un état de tension dominant ou recessif. Les tensions de chaque bus sont comprises dans l'intervalle [O, Vcc].

Selon une première solution, l'état dominant correspond à une tension comprise dans l'intervalle [O, Vcc/2[ et l'état recessif correspond à une tension comprise dans l'intervalle ]Vcc/2, Vcc].

Selon une seconde solution, l'état dominant correspond à une tension comprise dans l'intervalle ]Vcc/2, Vcc] et l'état recessif correspond à une tension comprise dans l'intervalle [O, Vcc/2[.

Les 2 solutions peuvent être utilisées simultanément dans le cas d'un bus différentiel comportant deux fils de transmission.

Dans le cas où sur un même bus une tension à caractère dominant et une tension à caractère recessif sont appliquées simultanément (collision), la tension dominante est prédominante.

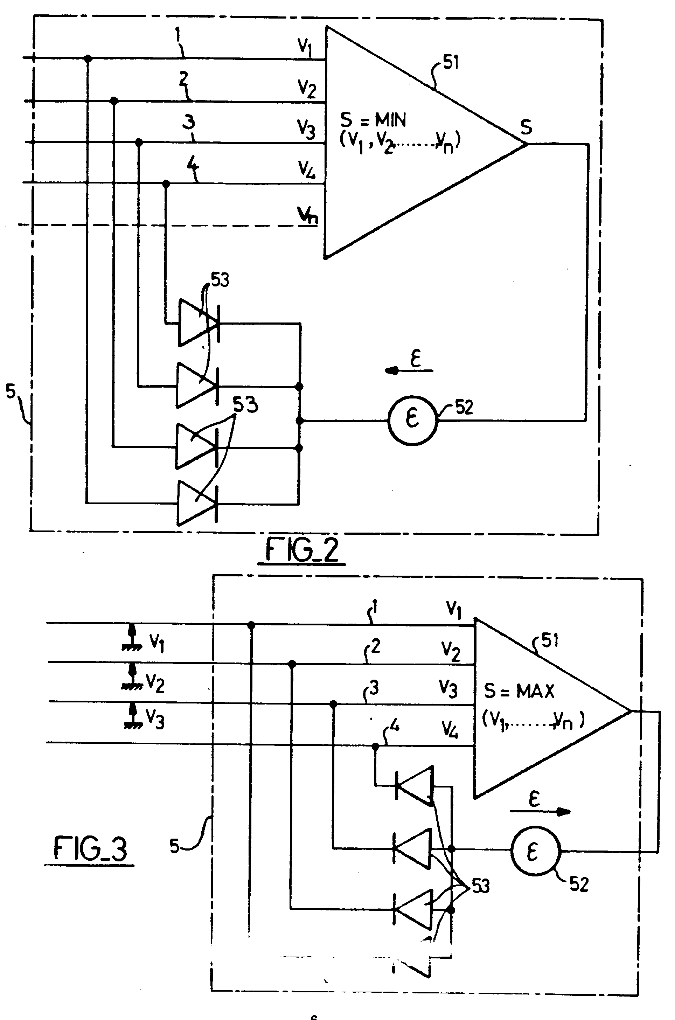

Dans le mode de réalisation de la figure 2, la tension à l'état dominant se trouve dans l'intervalle [O, Vcc/2[. Chaque bus est a une tension notée Vi par rapport à la masse. Si Vmin est la plus faible tension mesurée sur un bus donné à tout instant, le module 5 applique à tous les bus une tension maximale égale à Vmin augmentée d'un écart de tension ε, cet écart de tension étant faible par rapport à Vcc.

Dans le mode de réalisation de la figure 3, la tension à l'état dominant se trouve dans l'intervalle ]Vcc/2, Vcc]. Chaque bus est à une tension notée Vi par rapport à la masse. Si Vmax est la plus forte tension mesurée sur un bus donné à tout instant, le module 5 applique à tous les bus une tension minimale égale à Vmax diminuée d'un écart de tension ε , cet écart de tension étant faible par rapport à Vcc.

Dans chaque mode de réalisation, l'addition ou la soustraction de l'écart de tension ε permet d'éviter un blocage et assure une marge de sécurité.

Le module de connexion 5 illustré par les figures 2 à 5 comporte un circuit amplificateur opérationnel 51 recevant les différents bus et fournissant une tension à un circuit 52 qui fournit par l'intermédiaire de diodes 53 une tension aux différents bus 1 à 4.

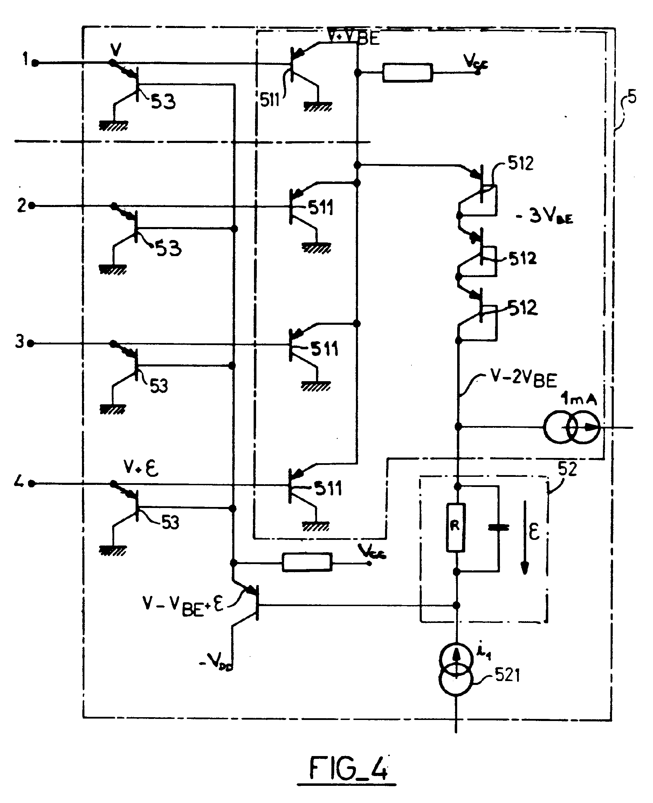

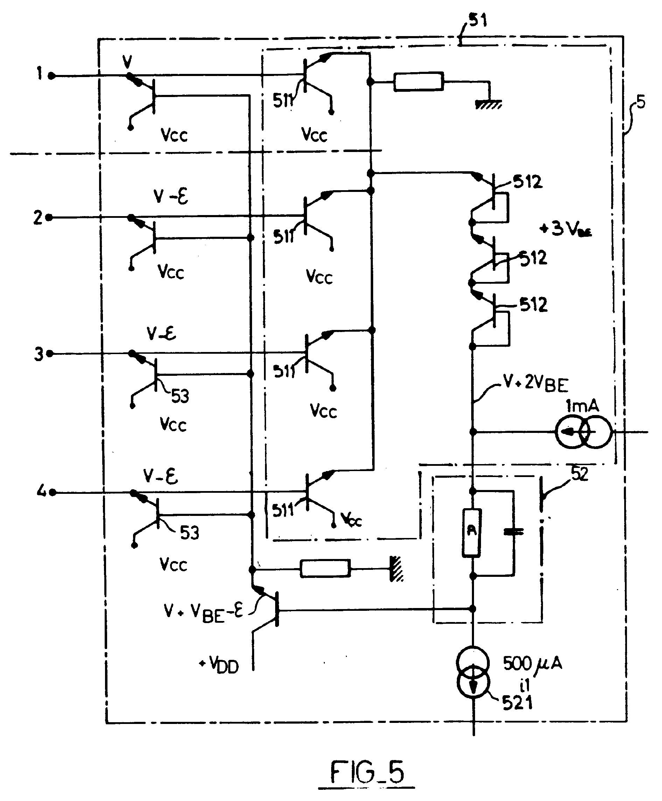

Ce module est illustré plus en détail aux figures 4 et 5. Le circuit 5 comprend :
- des transistors 511 qui comparent les tensions et fournissent une tension correspondant à la plus faible (Figure 4) ou à la plus forte (Figure 5) des tensions sur les différents bus.
- Les transistors 512 compensent les tensions bases-émetteurs des différents transistors 511.
- Le moyen de correction est constitué par un filtre associé au générateur de courant i1 521.
- Les transistors 53 montés en suiveurs de tension recopient la tension fournie par le comparateur 51 et adaptent l'impédance vis-à-vis des bus.

## Revendications

1. Dispositif d'interconnexion de bus dans un réseau de transmission d'informations où chaque bus relie une pluralité de modules ou stations, caractérisé par le fait qu'il comporte des moyens électroniques de comparaison (51) recevant les tensions des différents bus et délivrant une tension correspondant à la tension extrême des différentes tensions d'entrée et des moyens de correction 52 appliquant un écart faible à ladite tension extrême et des moyens de distribution (53) de ladite tension corrigée aux différents bus (1 à 4).

2. Dispositif selon la revendication 1, caractérisé par le fait que les moyens électroniques de comparaison (51) sont constitués par un amplificateur opérationnel de tension recevant en entrée les tensions des différents bus.

3. Dispositif selon l'une quelconque des revendications précédentes, caractérisé par le fait que les moyens de correction (52) sont constitués par un filtre .

4. Dispositif selon l'une quelconque des revendications précédentes, caractérisé par le fait que les moyens de distribution (53) sont constitués par un circuit à diodes recevant la tension corrigée et appliquant ladite tension à chaque bus.

## Patentansprüche

1. Vorrichtung zur Verbindung von Bussen in einem Nachrichtenübertagungsnetz, bei der jeder Bus eine Vielzahl von Modulen oder Stationen verbindet, **dadurch gekennzeichnet,** daß sie eine elektronische Vergleichsanordnung (51) aufweist, der die Spannungen der verschiedenen Busse zugeführt werden, und die eine Spannung liefert, entsprechend der Extremspannung der verschiedenen Eingangsspannungen, die eine Korrekturanordnung (52) aufweist, die der Extremspannung eine geringe Abweichung erteilt, und die eine Verteilanordnung (53) der korrigierten Spannung an die verschiedenen Busse (1 bis 4) aufweist.

2. Vorrichtung nach Anspruch 1, **dadurch gekennzeichnet,** daß die elektronische Vergleichsanordnung (51) aus einem Operations-Spannungsverstärker besteht, dessen Eingang die Spannungen der verschiedenen Busse zugeführt werden.

3. Vorrichtung nach einem der vorhergehenden Ansprüche, **dadurch gekennzeichnet,** daß die Korrekturanordnung (52) aus einem Filter besteht.

4. Vorrichtung nach einem der vorhergehenden Ansprüche, **dadurch gekennzeichnet,** daß die Verteilanordnung (53) aus einem Diodenschaltkreis besteht, dem die korrigierte Spannung zugeführt wird und der diese Spannung einem jeden Bus zuführt.

## Claims

1. A device for interconnecting buses in an information transmission network in which each bus connects a plurality of modules or stations, characterized in that it comprises electronic comparison means (51) receiving the voltages from the various buses and supplying a voltage corresponding to the extreme voltage of the various input voltages, correction means (52) applying a small deviation to this extreme voltage and means (53) for distributing this corrected voltage to the various buses (1 to 4).

2. A device as claimed in claim 1, characterized in that the electronic comparison means (51) are formed by an operational voltage amplifier receiving as input the voltages from the various buses.

3. A device as claimed in any one of the preceding claims, characterized in that the correction means (52) are formed by a filter.

4. A device as claimed in any one of the preceding claims, characterized in that the distribution means (53) are formed by a diode circuit receiving the corrected voltage and supplying this voltage to each bus.
